# DEMANDE DE BREVET EUROPEEN

(11) **EP 4 375 707 A1**
(43) Date de publication de la demande: **29.05.2024**
(21) Numéro de dépôt: 23210700.3
(22) Date de dépôt: 17.11.2023
(51) Int. Cl.: G01S 15/931, G01S 7/52, G01S 7/521

(54) **VÉHICULE ÉQUIPÉ DE CAPTEURS DE RECUL RÉGLABLES**

(30) Priorité: 24.11.2022 FR 2212258
(71) Demandeur: Renault s.a.s, 92100 Boulogne Billancourt (FR)
(72) Inventeur: PUIG, Philippe, 78280 GUYANCOURT (FR); SEIGNEUR, Quentin, 78280 GUYANCOURT (FR)

(57) **Abrégé**

L'invention concerne un véhicule (1) comprenant au moins un capteur de recul (10) débouchant dans une paroi (3) d'une façade arrière (2) dudit véhicule.

Selon l'invention, ledit capteur de recul (10) est solidarisé à un support déformable (11), ledit support déformable (11) étant relié à un support rigide (12) qui est fixé à la paroi (3) de la façade arrière (2), la liaison du support déformable (11) sur le support rigide (12) comportant des moyens de liaisons réglables (13, 14) aptes à déformer le support déformable (11) sur le support fixe (12) pour placer le capteur de recul (10) dans la bonne position.

## Description

La présente invention concerne un véhicule équipé de capteurs de recul réglables.

Afin de bien comprendre le positionnement des différentes pièces impliquées dans un véhicule selon l'invention, la description est réalisée en faisant référence à un repère orthonormé direct XYZ dans lequel X est un axe longitudinal avant-arrière du véhicule orienté vers l'arrière, Y est un axe transversal orienté vers la droite du véhicule et Z est un axe vertical dirigé vers le haut.

Les capteurs de recul existent depuis un certain temps dans l'automobile. Ils sont placés à l'arrière du véhicule et permettent de détecter la présence d'un obstacle situé à l'arrière de celui-ci. De cette manière, un conducteur amorçant une phase de recul avec son véhicule pour par exemple tenter de le garer, va être informé de la présence de cet obstacle par l'émission de bips sonores dans l'habitacle dudit véhicule, liée au fonctionnement de ces capteurs de recul. Plus le véhicule va se rapprocher de cet obstacle, plus la cadence d'émission de ces bips sonores va croître, jusqu'à parvenir à un signal sonore continu lorsque le véhicule est sur le point de toucher cet obstacle. Ces capteurs de recul qui sont positionnés à l'arrière du véhicule, de manière à faire face à une zone extérieure située à l'arrière dudit véhicule, sont destinés à assister le conducteur dans une manoeuvre malaisée, pour laquelle il a une faible maitrise visuelle.

Jusqu'à présent, en l'absence d'une réglementation précise, ces capteurs de recul étaient montés sur le véhicule de façon quelque peu approximative, avec le risque que ces capteurs ne fonctionnent pas de façon optimisée. Les conséquences d'un tel montage peu rigoureux, sont que les capteurs peuvent fournir des informations erronées sur la position relative du véhicule par rapport à l'obstacle, pouvant conduire à un choc dudit véhicule contre ledit obstacle situé derrière lui.

L'apparition d'une nouvelle réglementation, entraine que les capteurs de recul doivent être montés avec rigueur et précision à l'arrière du véhicule, pour pouvoir couvrir une sous-zone bien identifiée de la zone extérieure située à l'arrière du véhicule, ladite zone extérieure devant être couverte intégralement par les capteurs de recul du véhicule.

Un véhicule selon l'invention comprend au moins un capteur de recul dont la position peut être réglée avec minutie, notamment une fois que ledit capteur a été monté dans ledit véhicule.

L'invention a pour objet un véhicule comprenant au moins un capteur de recul débouchant dans une paroi de la façade arrière dudit véhicule.

Selon l'invention, ledit capteur de recul est solidarisé à un support déformable, ledit support déformable étant relié à un support rigide qui est fixé à la paroi de la façade arrière, la liaison du support déformable sur le support rigide comportant des moyens de liaison réglables aptes à déformer le support déformable sur le support rigide pour placer le capteur de recul dans la bonne position. De cette manière, une fois que le capteur de recul a été monté dans le véhicule, il demeure encore orientable dans le but d'affiner sa position et donc de couvrir une certaine zone prédéterminée située derrière le véhicule. De façon préférentielle, le capteur de recul est placé dans la bonne position par les moyens de liaison réglables, au moyen d'un mouvement de rotation. De façon avantageuse, l'amplitude maximale de déplacement dudit capteur de recul pour atteindre la bonne orientation avec les moyens de liaison réglables est comprise entre +25° et -25°, et de façon encore plus avantageuse, entre +15° et -15°. Préférentiellement, le véhicule comprend plusieurs capteurs de recul placés à la même altitude et répartis de façon homogène le long d'un axe transversal Y du véhicule. De façon préférentielle, les moyens de liaison réglables peuvent être réglés, soit manuellement, soit au moyen d'un outil usuel tel que par exemple un tournevis ou une pince. Chaque capteur de recul présente une face active par laquelle est émise une onde, ladite face active s'étendant dans un plan vertical et transversal YZ du véhicule. Cette face active peut affleurer une surface externe de la paroi de la façade arrière, ou bien elle peut émerger de ladite surface externe en étant placée juste derrière celle-ci à l'extérieur du véhicule. Le support rigide peut être fixé par tout moyen à la paroi de la façade arrière, comme par exemple par soudure. Le terme « support rigide » signifie que ledit support n'est pas conçu pour se déformer lorsque les moyens de liaison sont manipulés, contrairement au support déformable. Avantageusement, le support rigide affleure la paroi matérialisant la façade arrière du véhicule.

Selon une caractéristique possible de l'invention, les moyens de liaison réglables comprennent une première vis de réglage apte à provoquer une déformation du support déformable dans une première direction, ladite déformation engendrant une mise en rotation du capteur de recul dans un plan vertical et longitudinal XZ du véhicule. Les moyens de liaison réglables comprennent ainsi une composante permettant de régler le tilt du capteur de recul. Cette première vis de réglage est une vis sans fin, et une mise en rotation de cette première vis de réglage autour de son axe de révolution va provoquer une déformation du support déformable qui va entrainer un déplacement par rotation du capteur de recul dans un plan longitudinal et vertical XZ du véhicule. Cette première vis peut par exemple être manipulée au moyen d'un tournevis classique.

Selon une caractéristique possible de l'invention, les moyens de liaison réglables comprennent une deuxième vis de réglage apte à provoquer une déformation du support déformable dans une deuxième direction, ladite déformation engendrant une mise en rotation du capteur de recul dans un plan horizontal XY du véhicule. Les moyens de liaison réglables comprennent ainsi une composante permettant de régler la position du capteur de recul dans un plan horizontal. Cette deuxième vis de réglage est une vis sans fin, et une mise en rotation de cette deuxième vis de réglage autour de son axe de révolution va provoquer une déformation du support déformable qui va entrainer un déplacement par rotation du capteur de recul dans un plan horizontal XY du véhicule. Cette deuxième vis peut par exemple être manipulée au moyen d'un tournevis classique.

Selon une caractéristique possible de l'invention, la première vis de réglage et la deuxième vis de réglage traversent chacune le support déformable, une rondelle autobloquante étant insérée entre une tête de chacune desdites vis et une surface dudit support déformable. En effet, il est important que le capteur de recul, une fois que sa position a été ajustée avec précision pour couvrir la zone souhaitée derrière le véhicule, demeure figée dans cette position sans risque de dérive au cours du temps. Cette rondelle autobloquante empêche toute rotation de la première et de la deuxième vis de réglage autour de leurs axes de révolution qui serait susceptible de déformer de façon involontaire le support déformable sur le support rigide et donc de modifier l'orientation du capteur de recul.

Selon une caractéristique possible de l'invention, le support déformable est relié au support rigide par des moyens de fixation non réglables. Ces moyens de fixation non réglables permettent de renforcer la fixation du support déformable sur le support rigide en la rendant plus robuste, et en limitant les risques de dérive positionnelle au cours du temps dudit support déformable sur ledit support rigide.

Selon une caractéristique possible de l'invention, les moyens de fixation non réglables comprennent au moins une vis. Il s'agit d'une vis conventionnelle pouvant par exemple coopérer avec un écrou.

Selon une caractéristique possible de l'invention, le support rigide comprend une ouverture dans la continuité de laquelle est placé le capteur de recul. De cette manière, une surface active du capteur de recul par laquelle est émise une onde, se retrouve directement en vis-à-vis d'un obstacle à détecter situé à l'arrière du véhicule.

Selon une caractéristique possible de l'invention, le véhicule comprend quatre capteurs de recul équitablement répartis sur la paroi de la façade arrière le long d'un axe transversal Y du véhicule. La présence de quatre capteurs de recul permet de couvrir l'intégralité d'une zone située à l'arrière du véhicule et dans laquelle serait susceptible de se trouver un obstacle. Avantageusement, les quatre capteurs de recul sont placés à la même altitude au sein de la paroi de la façade arrière dudit véhicule.

L'invention a pour autre objet un procédé de réglage de la position d'un capteur de recul d'un véhicule selon l'invention.

Selon l'invention, ledit procédé comprend les étapes suivantes :
- une étape de liaison du support déformable auquel est solidarisé le capteur de recul, sur le support rigide avec des moyens de liaisons réglables,
- une étape de soudure du support rigide à la paroi de la façade arrière du véhicule,
- une étape de manipulation des moyens de liaison réglables pour déformer le support déformable sur le support rigide afin de régler l'orientation du capteur de recul.

Lors d'un tel procédé, lorsque le support rigide est soudé à la paroi de la façade arrière du véhicule, le capteur de recul est souvent placé dans une position qui est légèrement décalée par rapport à une position idéale pour laquelle il couvrirait la zone souhaitée. Les moyens de liaison réglables permettent d'affiner la position du capteur de recul au moyen d'une amplitude angulaire assez limitée pour le placer dans une position idéale.

L'invention a pour autre objet un ensemble comprenant un support rigide, un support déformable et un capteur de recul pour la réalisation d'un véhicule selon l'invention.

Selon l'invention, ledit capteur de recul est solidarisé au support déformable, ledit support déformable étant relié au support rigide par des moyens de liaison réglables aptes à déformer le support déformable pour placer le capteur de recul dans la bonne direction. Un tel ensemble peut être monté dans un endroit particulier, avant d'être acheminé le long d'une chaine d'assemblage d'un véhicule, permettant ainsi de ne pas encombrer ladite chaine d'assemblage.

Un véhicule selon l'invention présente l'avantage de posséder des capteurs de recul dont la position est réglable finement sur ledit véhicule, après que ledit capteur de recul a été monté dans ledit véhicule. Cette possibilité permet d'obtenir des capteurs de recul montés avec une grande précision dans ledit véhicule. Il a de plus l'avantage de posséder des capteurs de recul dont la position est réglable au moyen d'une simple manipulation pouvant ou non nécessiter l'utilisation d'un outil usuel, tel que par exemple un tournevis.

On donne ci-après, une description détaillée d'un mode de réalisation préféré d'un véhicule selon l'invention, en se référant aux figures suivantes :
[Fig. 1] La figure 1 est une vue en perspective de l'arrière d'un véhicule selon l'invention, montrant l'emplacement des capteurs de recul,
[Fig. 2] La figure 2 est une vue en perspective de l'intérieur d'une paroi d'une façade arrière d'un véhicule selon l'invention, montrant l'emplacement d'un capteur de recul,
[Fig. 3] La figure 3 est une vue en perspective d'un ensemble selon l'invention, comprenant un support rigide, un support déformable et un capteur de recul,
[Fig. 4] La figure 4 est une vue en perspective sous un autre angle de l'ensemble de la figure 3
[Fig. 5] La figure 5 est une vue du dessus d'un ensemble selon l'invention, comprenant un support rigide, un support déformable et un capteur de recul, ledit ensemble n'étant pas monté dans la bonne position dans le véhicule,
[Fig. 6] La figure 6 est une vue du dessus de l'ensemble de la figure 5, dont la position a été corrigée,
[Fig. 7] La figure 7 est un logigramme détaillant les principales étapes d'un procédé de réglage de la position d'un capteur de recul selon l'invention.

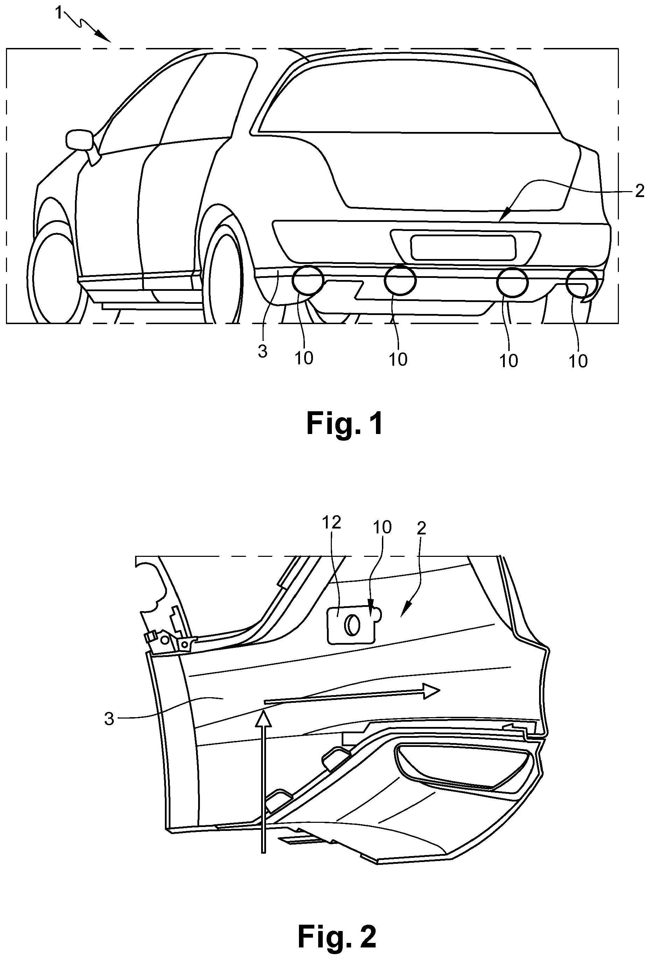

En se référant aux figures 1 et 2, un véhicule automobile 1 selon l'invention, est délimité par une façade arrière 2 qui est matérialisée par une paroi 3 s'étendant globalement dans un plan transversal et vertical YZ du véhicule. A titre d'exemple, le véhicule 1 comprend quatre capteurs de recul 10 placés à la même hauteur sur la paroi 3 matérialisant la façade arrière 2 dudit véhicule. Ces capteurs de recul 10 sont répartis de façon homogène sur ladite paroi 3, le long d'un axe transversal Y du véhicule, de façon à couvrir l'intégralité d'une zone située à l'arrière du véhicule et dans laquelle serait susceptible de se retrouver un obstacle. Pour rappel, ces capteurs de recul 10 émettent chacun un signal qui va se réfléchir sur un obstacle éventuel situé à l'arrière du véhicule. Ainsi, dès qu'un obstacle est détecté à l'arrière du véhicule, des bips sonores sont émis à l'intérieur du véhicule, à intervalles de temps réguliers, pour prévenir le conducteur de la présence de cet obstacle. Plus le véhicule 1 va se rapprocher de l'obstacle, plus les bips sonores seront émis avec une cadence élevée, pour se terminer par un signal sonore continu dès que le véhicule est sur le point d'entrer en contact avec ledit obstacle.

Pour éliminer tout risque de collision avec cet obstacle extérieur, il est impératif que les capteurs de recul 10 soient placés de façon très précise sur la paroi 3 matérialisant la façade arrière 2 du véhicule 1, de façon à couvrir toute la zone arrière dans laquelle serait susceptible de se retrouver un obstacle. En effet, si certaines parties de cette zone arrière n'étaient pas couvertes par ces capteurs de recul 10, les risques de collision du véhicule avec un obstacle extérieur seraient augmentés. Cette observation est d'autant plus vraie que le conducteur s'attend à entendre des bips sonores en cas de présence d'un obstacle extérieur. S'il n'entend rien, il pensera qu'il n'y a pas d'obstacle, et il effectuera sa marche arrière sans retenue particulière.

Pour remédier à ce problème de couverture de la totalité de la zone arrière située derrière le véhicule 1 par les capteurs de recul 10, un véhicule selon l'invention est équipé de plusieurs capteurs de recul 10, dont la position peut encore être affinée une fois que lesdits capteurs de recul 10 ont été montés dans le véhicule 1.

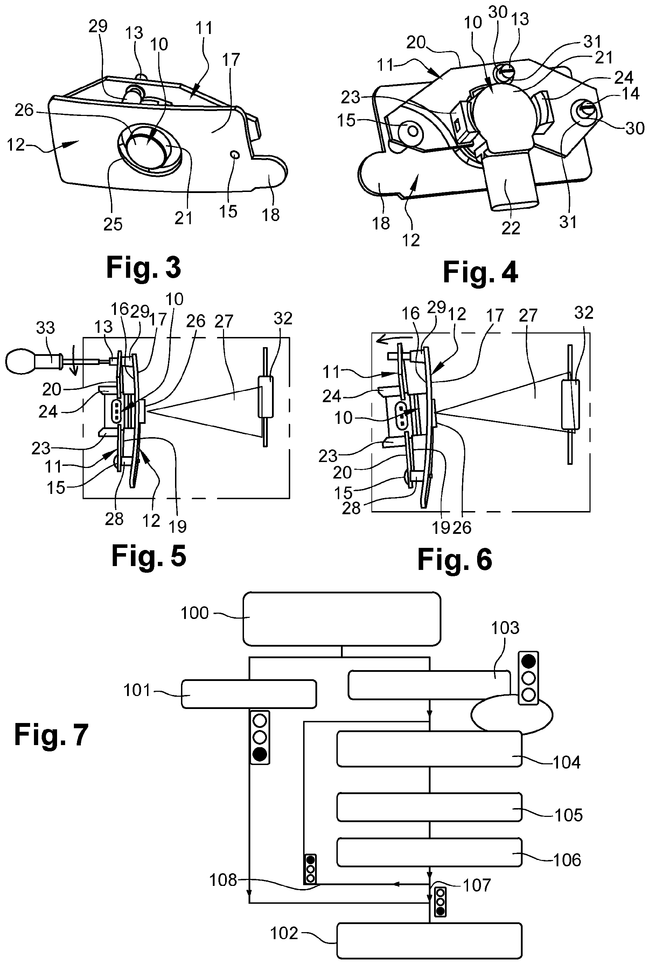

En se référant aux figures 3 et 4, chaque capteur de recul 10 d'un véhicule 1 selon l'invention, est solidarisé à un support déformable 11, qui est lui-même fixé à un support rigide 12 par le biais de moyens de liaison réglables 13, 14, et par le biais de moyens de liaison fixes 15. Le support rigide 12 est métallique et est assimilable à une languette plane, légèrement incurvée, et ayant un contour rectangulaire. Ce support rigide 12 présente une surface intérieure 16 et une surface extérieure 17, qui sont parallèles entre elles, ledit support rigide 12 étant doté d'un détrompeur sous la forme d'une excroissance 18 arrondie. Le support déformable 11 est une pièce plane et de faible épaisseur, présentant une surface intérieure 19 et une surface extérieure 20, ledit support déformable 11 étant fixé au support rigide 12 de sorte que :
- lesdits deux supports 11, 12 soient sensiblement parallèles entre eux, et
- leurs surfaces intérieures 16, 19 se font face.

Le capteur de recul 10 possède un tronçon principal 21 cylindrique et un tronçon secondaire 22 rectiligne, lesdits deux tronçons 21, 22 étant perpendiculaires. Deux protubérances d'accueil 23, 24 de forme légèrement incurvée et en regard l'une de l'autre, prennent naissance sur la surface extérieure 20 du support déformable 11 et servent à emprisonner le tronçon principal 21 du capteur de recul 10. Le support rigide 12 comporte une ouverture circulaire 25 pour permettre au tronçon principal 21 du capteur de recul 10 qui est fixé au support déformable 11 de se prolonger au-delà du support rigide 12. La surface active 26 du capteur de recul 10 par laquelle est émis le signal 27 envoyé par ledit capteur 10 vers une zone située derrière le véhicule 1, est placée à une extrémité du tronçon principal 21 qui émerge du support rigide 12, comme cela est illustré aux figures 5 et 6.

En se référant à la figure 4, les moyens de liaison fixes du support déformable 11 sur le support fixe 12 comprennent une vis 15 traversant le support déformable 11 et qui est insérée dans un trou taraudé d'un embout 28 émergeant de la surface intérieure 16 du support fixe 12. Les moyens de fixation réglables comprennent une première vis 13 de réglage sans fin, apte à provoquer une déformation du support déformable 11 dans une première direction, engendrant une rotation du capteur de recul 10 dans un plan vertical et longitudinal XZ du véhicule. Les moyens de fixation réglables comprennent également une deuxième vis 14 de réglage sans fin, apte à provoquer une déformation du support déformable 11 dans une deuxième direction, engendrant une rotation du capteur de recul 10 dans un plan horizontal XY du véhicule. La première vis 13 est placée au-dessus du tronçon principal 21 du capteur de recul 10, et la deuxième vis 14 est placée à côté dudit tronçon principal 21 et à la même altitude que celui-ci. Le support déformable 11 est relié de façon fixe à la première vis 13 de réglage et la deuxième vis 14 de réglage, lesdites deux vis 13, 14 de réglage pouvant être vissées dans des trous taraudés de deux embouts 29 émergeant de la surface intérieure 16 du support fixe 12. De cette manière, si l'une des deux vis de réglage 13, 14 est vissée dans le trou taraudé de l'embout 29 correspondant du support rigide 12, elle va pénétrer dans ledit trou ou en sortir, entrainant avec elle le support déformable 11 qui va alors se déformer puisqu'il est par ailleurs relié au support rigide 12 avec des moyens de liaison fixes. La première vis de réglage 13 et la deuxième vis de réglage 14 possède chacune une tête 30 traversée par une fente, ladite tête 30 émergeant de la surface extérieure 20 du support déformable 11. Une rondelle 31 autobloquante est insérée entre la tête 30 de chacune des deux vis de réglage 13, 14 et la surface extérieure 20 du support déformable 11.

Le support rigide 12 auquel est solidarisé le support déformable 11 portant le capteur de recul 10, est soudé à la paroi 3 de la façade arrière 2 du véhicule de manière à affleurer ladite paroi 3, et de manière que le support déformable 11 se retrouve à l'intérieur de ladite paroi 3.

En se référant à la figure 5, si après que le support rigide 12 ait été soudé à la paroi 3 de la façade arrière 2 du véhicule, le capteur de recul 10 ne couvrait pas entièrement la zone prévue 32 située à l'arrière du véhicule 1, il suffit de se munir d'un tournevis 33 puis de visser ou de dévisser au moins l'une des deux vis 13, 14 de réglage, pour déformer dans la bonne direction le support déformable 11. Le capteur de recul 10 se place alors dans une position favorable couvrant la zone prévue 32, comme cela est illustré à la figure 6. Les rondelles autobloquantes 31 associées aux vis de réglage 13, 14 permettent de figer lesdites vis 13, 14 dans la position dans laquelle elles ont été laissées, après le retrait du tournevis 33, pour empêcher que le support déformable 11 ne se déforme par inadvertance et modifie la position du capteur de recul 10.

En se référant à la figure 7, un procédé de vérification de la conformité des capteurs de recul 10 sur un véhicule monté en sortie de chaine comprend les étapes suivantes :
- une étape de contrôle 100 du bon positionnement de chaque capteur de recul 10 au sein du véhicule, en vérifiant la zone couverte à l'arrière dudit véhicule 1 par ledit capteur de recul 10,
- si le résultat du contrôle est satisfaisant 101, le véhicule est considéré comme vendable 102,
- si le résultat de contrôle n'est pas satisfaisant 103, une étape de comparaison 104 entre la zone effectivement couverte par le capteur de recul 10 et la zone idéale que devrait couvrir ledit capteur de recul 10,
- une étape de correction 105 de la position du capteur de recul 10 au moyen d'une manipulation d'au moins l'une des deux vis de réglage 13, 14 pour déformer le support déformable 11 dans la bonne direction,
- une étape de contrôle 106 du bon positionnement du capteur de recul 10 dont la position a été modifiée une première fois, en vérifiant la zone couverte à l'arrière dudit véhicule 1 par ledit capteur de recul 10,
- si le résultat du contrôle est satisfaisant 107, le véhicule est considéré comme vendable 102,
- si le résultat du contrôle n'est pas satisfaisant 108, une nouvelle étape de comparaison 104, et de correction 105 de la position du capteur de recul 10 jusqu'à ce que ladite position soit jugée satisfaisante.

## Revendications

1. Véhicule (1) comprenant au moins un capteur de recul (10) débouchant dans une paroi (3) d'une façade arrière (2) dudit véhicule, **caractérisé en ce que** ledit capteur de recul (10) est solidarisé à un support déformable (11), et **en ce que** ledit support déformable (11) est relié à un support rigide (12) qui est fixé à la paroi (3) de la façade arrière (2), la liaison du support déformable (11) sur le support rigide (12) comportant des moyens de liaisons réglables (13, 14) aptes à déformer le support déformable (11) sur le support fixe (12) pour placer le capteur de recul (10) dans la bonne position.

2. Véhicule selon la revendication 1, **caractérisé en ce que** les moyens de liaison réglables comprennent une première vis (13) de réglage apte à provoquer une déformation du support déformable (11) dans une première direction, ladite déformation engendrant une mise en rotation du capteur de recul (10) dans un plan vertical et longitudinal XZ du véhicule.

3. Véhicule selon l'une quelconque des revendications 1 ou 2, **caractérisé en ce que** les moyens de liaison réglables comprennent une deuxième vis (14) de réglage apte à provoquer une déformation du support déformable (11) dans une deuxième direction, ladite déformation engendrant une mise en rotation du capteur de recul (10) dans un plan horizontal XY du véhicule.

4. Véhicule selon les revendications 2 et 3, **caractérisé en ce que** la première vis (13) de réglage et la deuxième vis (14) de réglage traversent chacune le support déformable (11), et **en ce qu'**une rondelle autobloquante (31) est insérée entre une tête (30) de chacune desdites vis (13, 14) et une surface (20) dudit support déformable (11).

5. Véhicule selon l'une quelconque des revendications 1 à 4, **caractérisé en ce que** le support déformable (11) est relié au support rigide (12) par des moyens de fixation (15) non réglables.

6. Véhicule selon la revendication 5, **caractérisé en ce que** les moyens de fixation non réglables comprennent au moins une vis (15).

7. Véhicule selon l'une quelconque des revendications 1 à 6, **caractérisé en ce que** le support rigide (12) comprend une ouverture (25) dans la continuité de laquelle est placé le capteur de recul (10).

8. Véhicule selon l'une quelconque des revendications 1 à 7, **caractérisé en ce qu'**il comprend quatre capteurs de recul (10) équitablement répartis sur la paroi (3) de la façade arrière (2) le long d'un axe transversal Y du véhicule.

9. Procédé de réglage de la position d'un capteur de recul d'un véhicule selon l'une quelconque des revendications 1 à 8, **caractérisé en ce qu'**il comprend les étapes suivantes :
- une étape de liaison du support déformable (11) auquel est solidarisé le capteur de recul (10), sur le support rigide (12) avec des moyens de liaison réglables (13, 14),
- une étape de soudure du support rigide (12) à la paroi (3) de la façade arrière (2) du véhicule,
- une étape de manipulation des moyens de liaison réglables (13, 14) pour déformer le support déformable (11) sur le support rigide (12) afin de régler l'orientation du capteur de recul (10).

10. Ensemble comprenant un support rigide (12), un support déformable (11) et un capteur de recul (10) pour la réalisation d'un véhicule selon l'une quelconque des revendications 1 à 8, **caractérisé en ce que** ledit capteur de recul (10) est solidarisé au support déformable (11), et **en ce que** ledit support déformable (11) est relié au support rigide (12) par des moyens de liaison réglables (13, 14) aptes à déformer le support déformable (11) sur le support rigide (12) pour placer le capteur de recul (10) dans la bonne position.
